# EUROPEAN PATENT APPLICATION

(11) **EP 4 718 525 A1**
(43) Date of publication of application: **01.04.2026**
(21) Application number: 23949099.8
(22) Date of filing: 27.12.2023
(51) Int. Cl.: H01M 4/36, H01M 4/62, H01M 4/505, H01M 4/525

(54) **POSITIVE ELECTRODE MATERIAL AND PREPARATION METHOD THEREFOR, AND LITHIUM ION BATTERY**

(30) Priority: 15.08.2023 CN 202311020334
(71) Applicant: Ningbo Ronbay New Energy Technology Co., Ltd., Yuyao Ningbo, Zhejiang 315402 (CN)
(72) Inventor: LIU, Xiaoming, Ningbo, Zhejiang 315402 (CN); FANG, Zheng, Ningbo, Zhejiang 315402 (CN); ZHANG, Yuanyuan, Ningbo, Zhejiang 315402 (CN); HU, Pingping, Ningbo, Zhejiang 315402 (CN); LIU, Boyu, Ningbo, Zhejiang 315402 (CN); LIU, Zhiyuan, Ningbo, Zhejiang 315402 (CN)
(74) Representative: J A Kemp LLP
(86) International application number: PCT/CN2023/142533
(87) International publication number: WO 2025/035684

(57) **Abstract**

The present invention provides a positive electrode material and a preparation method thereof, and a lithium-ion battery. The positive electrode material includes a core, an oxygen-absorbing layer, and a passivation layer in sequence from inside to outside; the core includes an oxide composed of Ni, Li, a metal element *M,* and a non-metal element *Q;* the metal element *M* includes at least one of Mg, Al, Zr, Ca, Ti, Sr, Y, Nb, Mo, W, Ta, or Ce; the non-metal element *Q* includes at least one of F, B, P, or Si; the oxygen-absorbing layer is an unsaturated oxide including a coating element *L;* the coating element *L* includes at least one of V, Ga, In, Sn, Bi, Ce, Pr, or Sb; the passivation layer is a compound including element F. In the present invention, the effect of suppressing evolution of gaseous oxygen can be achieved by the functional design of different layered structures for the positive electrode material.

## Description

This application claims priority to Chinese Patent Application No. 202311020334.0, filed with the China National Intellectual Property Administration on August 15, 2023, and entitled "POSITIVE ELECTRODE MATERIAL AND PREPARATION METHOD THEREOF, AND LITHIUM-ION BATTERY", which is hereby incorporated by reference in its entirety.

### TECHNICAL FIELD

The present invention relates to the technical field of lithium-ion batteries, and in particular, to a positive electrode material and a preparation method thereof, and a lithium-ion battery.

### BACKGROUND

The positive electrode material, as the lithium source of the lithium battery, releases lithium electrons during charging, which are intercalated into the structure of the negative electrode material. During discharging, the lithium electrons are deintercalated from the negative electrode material to re-form compounds, thereby releasing electrical energy. Generally speaking, the positive electrode material is a layered lithium nickel-cobalt-manganese oxide composite, which can be classified into different models according to different proportions of each element in the material.

During the charge and discharge process of the positive electrode material, the highly active lattice oxygen tends to generate O₂, which accelerates the decomposition of the electrolyte, causing increased interface impedance, formation of micro-cracks, and irreversible phase transition. Therefore, how to suppress the evolution of oxygen is currently an urgent issue to be addressed.

### SUMMARY

In the related arts, during the charge-discharge cycling process of the positive electrode material, the high activity of lattice oxygen easily leads to the formation of gaseous oxygen. How to inhibit the release of gaseous oxygen is one of the technical problems that the present invention aims to solve.

In order to solve the above problems, the present invention provides a positive electrode material, including, from inside to outside, a core, an oxygen-absorbing layer, and a passivation layer in sequence; the core includes an oxide composed of Ni, Li, a metal element *M* and a non-metal element *Q;* the metal element *M* includes at least one of Mg, Al, Zr, Ca, Ti, Sr, Y, Nb, Mo, W, Ta, or Ce; the non-metal element *Q* includes at least one of F, B, P, or Si; the oxygen-absorbing layer is an unsaturated oxide containing a coating element *L*; the coating element *L* includes at least one of V, Ga, In, Sn, Bi, Ce, Pr, or Sb; the passivation layer is a compound containing element F.

In this technical solution, the positive electrode material includes a three-layer structure, consisting of, from inside to outside, a core, an oxygen-absorbing layer and a passivation layer in sequence. Where, the core achieves doping of positive and negative ions by introducing a metal element *M* and a non-metal element *Q.* The metal element *M* is doped into the core as a positive-valent ion, with a bond energy between the metal element *M* and element oxygen being greater than a bond energy between transition-metal element and element oxygen, thus the metal element *M* can immobilize the element oxygen within the core. The non-metal element *Q* is doped into the core as a negative-valent ion, where element boron, element phosphorus and element silicon and element oxygen form a stable polyanion structure, which is more stable, therefore, the non-metal element *Q* can play a role in immobilizing oxygen atoms and avoid the evolution of gaseous oxygen to a certain extent. Element fluorine replaces the lattice oxygen, and since a bond energy between element fluorine and the transition-metal element is greater than a bond energy between the transition-metal element and element oxygen, the material is more stable.

Further, an oxygen-absorbing layer is arranged on an outer surface of the core and includes an unsaturated oxide of the coating element *L.* The coating element *L* is selected from elements that have multiple valence states and a tendency to valence change. Therefore, in the oxide of the coating element *L,* the coating element *L* can exhibit different valence states. When the oxide of the coating element *L* contains a low-valence oxide, it possesses a certain reduction and valence-change capabilities, thus it is called an unsaturated oxide. That is, in this technical solution, the oxide of coating element *L* with the highest valence is considered to be a saturated oxide, and conversely, the others are considered as unsaturated oxides. During the charge and discharge process of the positive electrode material, since the oxygen-absorbing layer is an unsaturated oxide, it undergoes a redox reaction itself, and the valence state of coating element *L* changes from low to high, which can effectively prevent the lattice oxygen from being oxidized to generate gaseous oxygen. The passivation layer includes a fluorine-containing compound, which can inhibit and slow down the corrosion kinetics of HF in the electrolyte on the passivation layer, so that the passivation layer of the positive electrode material of the present invention has better resistance to electrolyte corrosion than the ordinary oxide passivation layers.

Further, the core has an element composition as shown in Formula (I):

Li_{y}NiₐCo_{b}Mn_{c}M_{d}Q_{α}O₂ (I),

where values of *y, a, b, c, d,* and *α* are as follows:
0.98≤y≤1.20, 0.5≤a≤0.9, 0≤b≤0.4, 0≤c≤0.4, 0<d<0.1, 0<α<0.1.

In this technical solution, the core of the positive electrode material generally adopts a nickel-cobalt-manganese ternary material as a matrix. However, in a specific implementation, element cobalt and/or element manganese may not be included. Nickel-cobalt-manganese materials with different proportions can exhibit distinct characteristics. For example, increasing element nickel can enhance the capacity of battery; increasing element cobalt can reduce cation mixing and improve the cycle performance of battery; increasing element manganese can enhance the safety of battery. In the present invention, the contents of nickel, cobalt and manganese is as shown in Formula (I). The positive electrode material with this proportion has a high energy density and an excellent safety and stability.

Further, in the core, the non-metal element *Q* includes F; and the core has an element composition as shown in Formula (III):

Li_{y}NiₐCo_{b}Mn_{c}M_{d}Q1_{α1}F_{α2}O_{2-α2} (III),

where the element *Q1* includes at least one of B, P, or Si;
values of *y*, *a*, *b, c, d, α1,* and *α2* are as follows: 0.98≤y≤1.20, 0.5≤a≤0.9, 0≤b≤0.4, 0≤c≤0.4, 0<d<0.1, 0≤α1<0.05, 0<α2<0.05.

In this technical solution, element fluorine can replace part of element oxygen. Element fluorine is doped into the core as a negative-valent ion. Fluorine atoms, with high electronegativity, can substitute for some oxygen atoms, thereby reducing the content of unstable lattice oxygen. The bond energy between fluorine atoms and transition-metal ions is greater than the bond energy between oxygen atoms and transition-metal ions. Therefore, the doping of element fluorine can also inhibit the dissolution of transition-metal elements. Where, α2 is used for representing the substitution of element fluorine for lattice oxygen.

The non-metal element *Q* may only include element fluorine, or may include at least one of boron, phosphorus, or silicon. B, P, and Si are doped into the core as non-metal ions, and may form a polyanion structure with element oxygen. Since the bond energy between them is greater than the bond energy between element oxygen and transition-metal elements, the evolution of lattice oxygen can be suppressed, and the immobilization of element oxygen (oxygen atom) can be achieved.

Further, the oxygen-absorbing layer has an element composition as shown in Formula (II):

LₑO_{2-β} (II),

where, values of *e* and *β* are as follows: 0.8≤e≤4, 0.1<β<1.0.

In this technical solution, the oxygen-absorbing layer is an unsaturated oxide, and the valence state of the coating element *L* in this layer presents a variety of situations, thus the value range of its subscript *e* is from 0.8 to 4. *β* is used for indicating an unsaturation degree of the coating element *L* in the oxygen-absorbing layer, reflecting the proportion of oxides of the element with different valence states (in low valence states). The coating element *L* is preferably an element that has multiple valence states and is prone to valence change, such as V, Ga, In, Sn, Bi, Ce, Pr, Sb, etc. As a preferred option, the coating element *L* is element Ce. Element Ce has a 4f orbital that is not filled with electrons. Under oxidation or reduction conditions, there is a rapid conversion between Ce³⁺ and Ce⁴⁺, thereby acting as an electron "reservoir" to prevent lattice oxygen from being oxidized.

Further, the passivation layer has an element composition shown in Formula (IV):

X_{f}O_{2-γ}F_{γ} (IV),

where, values of *f* and *γ* are as follows: 0.6<f<4, 0.05<γ<0.3; and element *X* includes at least one of Li, Mg, Al, Zr, Ti, or W.

In this technical solution, the passivation layer contains fluoride, which may act as a physical barrier to protect the positive electrode material, so that the corrosion kinetics of the electrolyte is slowed down. On the other hand, element fluorine in the passivation layer may replace part of element oxygen, thereby reducing the content of unstable lattice oxygen. The effect achieved thereby is the same as that of element fluorine in the core, which will not be repeated here.

Further, the core has a particle size of 0.5µm-20µm; and/or the oxygen-absorbing layer has a thickness of 0.01µm-0.1µm; and/or the passivation layer has a thickness of 0.01µm-0.1µm.

In this technical solution, the core is generally spherical-like in morphology. The primary particles, which refer to irregular small particles, are also known as single crystals. The secondary particles, which are obtained by the stacking of primary particles, are also known as polycrystals. The formation of primary particles and secondary particles is closely related to the sintering process. In the technical solution provided by the present invention, the core may be single crystal, polycrystal, or a combination of single crystal and polycrystal. As a preferred option, the particle size of the primary particles ranges from 0.5µm to 10µm, and the particle size of the secondary particles ranges from 1µm to 20µm. Therefore, the particle size of the core ranges from 0.5µm to 20µm. The thicknesses of the oxygen-absorbing layer and the passivation layer are related to the diffusion rate of lithium ions. As a preferred option, the thickness of the oxygen-absorbing layer is 0.02µm-0.08µm; and the thickness of the passivation layer is 0.03µm-0.08µm.

The present invention also provides a method for preparing the above-mentioned positive electrode material, including the following steps.

S10: obtaining a precursor, a lithium source and a dopant, mixing them evenly, and performing a primary sintering under an oxygen atmosphere or an air atmosphere to obtain a first oxide.

S20: mixing the first oxide with a first coating agent, and performing a secondary sintering under a reducing atmosphere or an inert atmosphere to obtain a second oxide.

S30: mixing the second oxide with a second coating agent, and performing a tertiary sintering under a reducing atmosphere or an inert atmosphere to obtain the positive electrode material.

Where, the dopant includes a metal element *M* and a non-metal element *Q;* the first coating agent includes a coating element *L*; and the second coating agent includes element F.

In this technical solution, the precursor, lithium source and dopant are subjected to the primary sintering to obtain the first oxide, i.e., the core. Further, the first oxide and the first coating agent are mixed and subjected to the secondary sintering, so that the oxygen-absorbing layer can be formed on the surface of the core. Furthermore, the second oxide and the second coating agent are mixed and subjected to the tertiary sintering, so that the passivation layer can be formed on the surface of the oxygen-absorbing layer. Since the oxygen absorbing layer is an unsaturated oxide, the atmosphere of the secondary sintering is an inert atmosphere or a reducing atmosphere, preferably the reducing atmosphere. Specifically, the reducing atmosphere may be at least one of hydrogen, nitrogen or carbon monoxide.

In the specific implementation, between S10 and S20, the first oxide is subjected to a crushing treatment. The crushing may be carried out by means of air flow or mechanical crushing, and the D50 of the first oxide after crushing is controlled to be 1-20µm. The crushing treatment can make the mixing between the first oxide and the first coating agent more sufficient, which is conducive to more uniform coating of the oxygen-absorbing layer in the positive electrode material.

Further, the primary sintering has a temperature of 500°C-1000°C, and a holding duration of 8h-15h; and/or the secondary sintering has a temperature of 300°C-600°C, and a holding duration of 8h-15h; and/or the tertiary sintering has a temperature of 300°C-600°C, and a holding duration of 8h-15h; and/or the precursor, the lithium source and the dopant have a mixing molar ratio of 1:(1.04-1.20):(0.01-0.2); and/or the first oxide and the first coating agent have a mixing molar ratio of 1:(0.001-0.02); and/or the second oxide and the second coating agent have a mixing molar ratio of 1:(0.001-0.02).

As a preferred option, the primary sintering has a temperature of 600°C-800°C, and a holding duration of 10h-12h; the secondary sintering has a temperature of 400°C-500°C, and a holding duration of 10h-12h; the tertiary sintering has a temperature of 400°C-500°C, and a holding duration of 10h-12h; the precursor, the lithium source and the dopant have a mixing molar ratio of 1:(1.1-1.15):(0.05-0.16); the first oxide and the first coating agent have a mixing molar ratio of 1:(0.008-0.015); the second oxide and the second coating agent have a mixing molar ratio of 1:(0.008-0.015).

In the above solutions, after each sintering is completed, the sintered product is naturally cooled to room temperature before being subjected to the next process. The heating rate of the primary sintering, the secondary sintering and the tertiary sintering is preferably 10°C/h to 150°C/h, more preferably 50°C/h to 110°C/h.

Further, the lithium source contains LiF; and/or the dopant includes at least one of LiF, MgF₂, AlF₃, ZrF₄, or CeF₃.

In this technical solution, preferably, LiF is doped into the lithium source, so that the doping of element fluorine can be directly accomplished. The dopant includes a metal element *M* and a non-metal element *Q*, which can be specifically selected from at least one of Al₂O₃, Al(OH)₃, SrO, TiO₂, ZrO₂, MgO, CaCO₃, Ca(OH)₂, Y₂O₃, Nb₂O₅, CeO₂, MoO₃, WO₃, H₂WO₄, LiF, NH₄F, MgF₂, AlF₃, ZrF₄, CeF₃, B₂O₃, H₃BO₃, TiB₂, (NH₄)₃PO₄, AlPO₄, MgHPO₄, H₂SiO₃, or Al₂SiO₅. The first coating agent includes the coating element *L,* which can be specifically selected from at least one of V₂O₃, Ga₂O₃, In₂O₃, SnO₂, Bi₂O₅, CeO₂, PrO₂, or Sb₂O₃. The second coating agent includes element F, which can be specifically selected from at least one of LiF, NH₄F, MgF₂, AlF₃, or ZrF₄. The second coating agent may also include at least one of Al₂O₃, TiO₂, ZrO₂, MgO, WO₃, or H₂WO₄.

As a preferred option, the dopant includes at least one of LiF, MgF₂, AlF₃, CeF₃, or ZrF₄. The cations in the above dopants may replace transition-metal elements, forming an A-O having a greater bond energy than TM-O, as well as an A-F having a greater bond energy than TM-F, where *A* represents element Mg, Al, or Zr; TM represents a transition-metal element. Therefore, the overflow of unstable lattice oxygen can be suppressed.

The present invention also provides a lithium-ion battery, the positive electrode material provided by any one of the above, thus including the effects of any of the above solutions, which will not be repeated here.

### BRIEF DESCRIPTION OF DRAWINGS

The above and/or additional aspects and advantages of the present invention will become apparent and easily understood from the description of the embodiments in conjunction with the following drawings.
FIG. 1 is a microscopic morphology image of a positive electrode material provided by an embodiment of the present invention.
FIG. 2 is a microscopic morphology image of another positive electrode material provided by an embodiment of the present invention.
FIG. 3 is a microscopic morphology image of another positive electrode material provided by an embodiment of the present invention.
FIG. 4 shows volume growth rates of different samples of embodiments of the present invention under a storage condition of 70°C.

### DESCRIPTION OF EMBODIMENTS

In order to make the above-mentioned purposes, features and advantages of the present invention more obvious and comprehensible, the technical solutions in the embodiments of the present invention are described clearly and completely below. Obviously, the described embodiments are merely part of the embodiments of the present invention, rather than all of the embodiments. Based on the embodiments of the present invention, all other embodiments obtained by those of ordinary skill in the art without making creative work shall fall within the scope of protection of the present invention.

During the charge-discharge cycling process of the positive electrode material, when the majority of transition-metal ions have been fully oxidized after the first cycle of charging, the high activity of lattice oxygen causes the oxygen ions to start to participate in the oxidation process, forming gaseous oxygen and thereby generating oxygen vacancies. The energy required for the initial formation of oxygen vacancies is approximately 0.5-0.6eV. Due to the slow migration of oxygen, oxygen vacancies are mainly formed in the surface and sub-surface regions within the top 5-6 atomic layers. When oxygen vacancies diffuse along specific crystallographic directions, they accumulate on the surface, causing significant volume contraction and changes in the c/a ratio, generating mechanical stress. This easily leads to lattice mismatch and the occurrence of micro-cracks in single-crystal positive electrode material. Oxygen vacancies and oxygen loss caused by the oxidation of lattice oxygen may induce phase transition, changes in electronic structure and the formation of defects, resulting in material dead zones.

Therefore, for the above problems, the present invention provides a positive electrode material. The positive electrode material includes a core, an oxygen-absorbing layer, and a passivation layer in sequence from inside to outside. The core includes an oxide composed of Ni, Li, a metal element *M* and a non-metal element *Q.* The metal element *M* includes at least one of Mg, Al, Zr, Ca, Ti, Sr, Y, Nb, Mo, W, Ta, or Ce. The non-metal element *Q* includes at least one of F, B, P, or Si. The oxygen-absorbing layer includes an unsaturated oxide of a coating element *L.* The coating element *L* includes at least one of V, Ga, In, Sn, Bi, Ce, Pr, or Sb. The passivation layer includes a compound of element F.

In this technical solution, the positive electrode material includes a three-layer structure, consisting of a core, an oxygen-absorbing layer and a passivation layer in sequence from inside to outside. Where, the metal element *M* and the non-metal element *Q* are introduced into the core to achieve the doping of positive and negative ions. The metal element *M* is doped into the core as a positive-valent ion, with a bond energy between the metal element *M* and element oxygen being greater than a bond energy between the transition-metal element and element oxygen, thus the metal element *M* can immobilize element oxygen in the core. The non-metal element *Q* is doped into the core as a negative-valent ion, where element boron, element phosphorus, element silicon, and element oxygen form a stable polyanion structure; and element fluorine replaces the lattice oxygen; and since the bond energy between the element fluorine and the transition-metal element is greater than the bond energy between the transition-metal element and oxygen element, the material is more stable.

Further, an oxygen-absorbing layer is arranged on an outer surface of the core, and includes an unsaturated oxide of the coating element *L.* The coating element *L* is selected from elements having multiple valence states and a tendency to valence change. Therefore, during the charge and discharge process of the positive electrode material, since the oxygen-absorbing layer is an unsaturated oxide, it undergoes a redox reaction itself, and the valence state of the coating element L changes from low to high, which can effectively prevent the lattice oxygen from being oxidized to generate gaseous oxygen. The passivation layer includes a fluorine-containing compound, which can inhibit and slow down the corrosion kinetics of HF in the electrolyte toward the passivation layer, so that the passivation layer of the positive electrode material of the present invention exhibits better resistance to the electrolyte corrosion than ordinary oxide passivation layers.

The present invention can achieve the effect of inhibiting gaseous oxygen evolution by the functional design of different layered structures of the positive electrode material. Further, the above-mentioned positive electrode material is prepared by the following method.

S 10: obtaining a precursor, a lithium source and a dopant, mixing them evenly, and performing a primary sintering under an oxygen atmosphere or an air atmosphere to obtain a first oxide.

S20: mixing the first oxide and a first coating agent, and performing a secondary sintering under a reducing atmosphere or an inert atmosphere to obtain a second oxide.

S30: mixing the second oxide and a second coating agent, and performing a tertiary sintering under the reducing atmosphere or the inert atmosphere to obtain a positive electrode material.

Where, the dopant includes a metal element *M* and a non-metal element *Q;* the first coating agent includes a coating element *L*; and the second coating agent includes element F.

In this technical solution, the precursor, lithium source and dopant are subjected to the primary sintering to obtain the first oxide, i.e., the core. Further, the first oxide is mixed with the first coating agent for the secondary sintering to form an oxygen-absorbing layer on a surface of the core. And further, mixed with the second coating agent for the tertiary sintering to form the passivation layer on a surface of the oxygen-absorbing layer. Since the oxygen-absorbing layer is an unsaturated oxide, the atmosphere of the secondary sintering is the inert atmosphere or reducing atmosphere. Specifically, the reducing atmosphere may be composed of one or more of hydrogen, methane or carbon monoxide.

### Example 1

This example provides a method for preparing a positive electrode material, including the following steps.
1. NCM811 precursor, LiOH, AlF₃, and H₃BO₄ are mixed in a molar ratio of 1:1.05:0.001:0.001, added into a high-speed mixer for blending, and subjected to a primary sintering under an oxygen atmosphere to obtain a first oxide.

Where, a speed for blending is 800rpm/min and a duration for blending is 30min.

The primary sintering has a sintering process as follows: heating to 860°C at a rate of 15°C/min and then maintaining for 12h.

2. The first oxide is crushed and then mixed with CeO₂ in a molar ratio of 1:0.005, and subjected to a secondary sintering under a hydrogen atmosphere to obtain a second oxide.

Where, the secondary sintering has a sintering process as follows: heating to 600°C at a rate of 15°C/min and then maintaining for 10h. The first oxide after being crushed has a particle size controlled at D50=3.5µm.

3. The second oxide and AlF₃ are mixed in a molar ratio of 1:0.005, and subjected to a tertiary sintering under a nitrogen atmosphere to obtain a positive electrode material.

Where, the tertiary sintering has a sintering process as follows: heating to 450°C at a rate of 15°C/min and then maintaining for 10h.

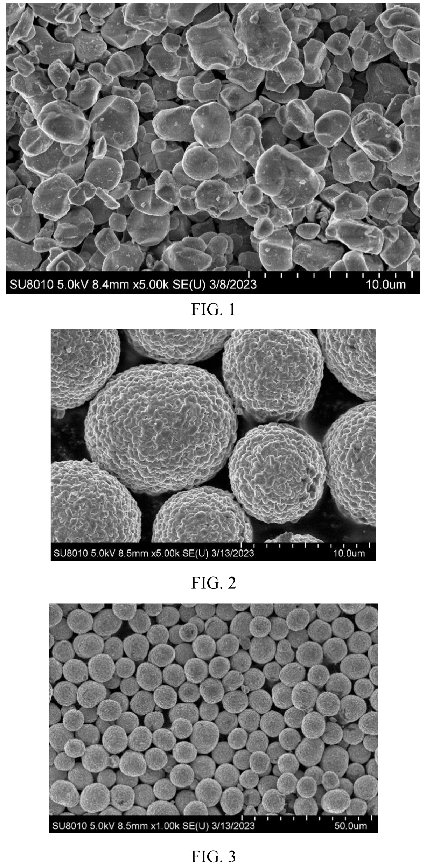

The positive electrode material prepared in this example has a single-crystal morphology, and its microscopic structure is shown in FIG. 1.

### Example 2

This example provides a method for preparing a positive electrode material. The specific steps are as shown in Example 1, with the difference of mixing NCM811 precursor, LiOH, LiF, Al₂O₃, and H₃BO₄ according to a molar ratio of 1:1.10:0.05:0.0005:0.001.

### Example 3

This example provides a method for preparing a positive electrode material. The specific steps are as shown in Example 1, with the difference of replacing CeO₂ with V₂O₅.

### Example 4

This example provides a method for preparing a positive electrode material. The specific steps are as shown in Example 1, with the difference of replacing AlF₃ with MgF.

### Example 5

This example provides a method for preparing a positive electrode material. The specific steps are as shown in Example 1, except that the primary sintering has a sintering process as follows: heating to 800°C at a rate of 15°C/min and then maintaining for 12h.

The positive electrode material obtained by the sintering in this example has a polycrystal morphology, as shown in FIG. 2 and FIG. 3, which are electron microscope images of the positive electrode material in this example at different magnifications.

### Comparative Example 1

This example provides a method for preparing a positive electrode material. The specific steps are as shown in Example 1, with the difference of replacing AlF₃ with Al₂O₃ in step 1.

### Comparative Example 2

This example provides a method for preparing a positive electrode material. The specific steps are as shown in Example 1, with the difference of no addition of H₃BO₄.

### Comparative Example 3

This example provides a method for preparing a positive electrode material. The specific steps are as shown in Example 1, except that the secondary sintering is performed under an oxygen atmosphere.

### Comparative Example 4

This example provides a method for preparing a positive electrode material. The specific steps are as shown in Example 1, with the difference of replacing AlF₃ with Al₂O₃ in step 3.

Performance tests are conducted on the positive electrode materials prepared in the above-mentioned Examples 1-5 and Comparative examples 1-4. Each of the positive electrode materials of the Examples and Comparative examples is fabricated into a battery, and volume growth rates of different samples under a storage condition of 70°C are tested.

The volume of gas expansion is calculated using a drainage method. Batteries with different degrees of gas expansion are placed into a water tank (a recharge process is required, and the tab should be well protected). Their drainage weights are measured using an electronic density tester, and then a volume conversion is performed to obtain the amount of volume expansion.

Specific steps are as follows:
1. Preparing a battery with each of the positive electrode materials of the Examples and Comparative Examples, protecting the tab of battery under a fully charged state, and slowly placing the battery into a 70°C water tank; waiting for 30s, then measuring the weight of water drained from the water tank, and dividing the weight by a medium density to obtain an initial volume V₀ of the battery;
2. Drying the battery and placing it into an incubator for storage at a high temperature of 70°C for 7 days;
3. Protecting the tab of battery well after high-temperature storage, and slowly placing the battery into the 70°C water tank; waiting for 30s, then measuring the weight of water drained from the water tank, and dividing the weight by the medium density to obtain a volume V₇ of the battery; and calculating a volume growth rate at Day 7 by the formula: (V₇ - V₀) / V₀ × 100%;
4. After drying the battery, fully charging the battery at 4.35V and placing the battery into the incubator for storage at a high temperature of 70°C for another 7 days;
5. Repeating steps 3-4 to obtain the volume growth rates under different days of high-temperature storage.

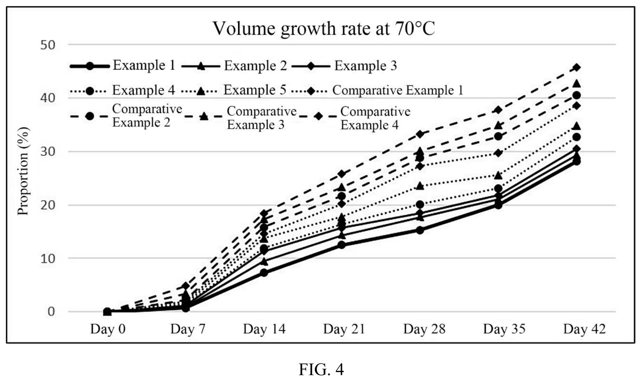

The volume growth rates of different samples under a storage condition of 70°C are shown in Table 1. A line chart obtained by plotting the data in Table 1 is shown in FIG. 4.

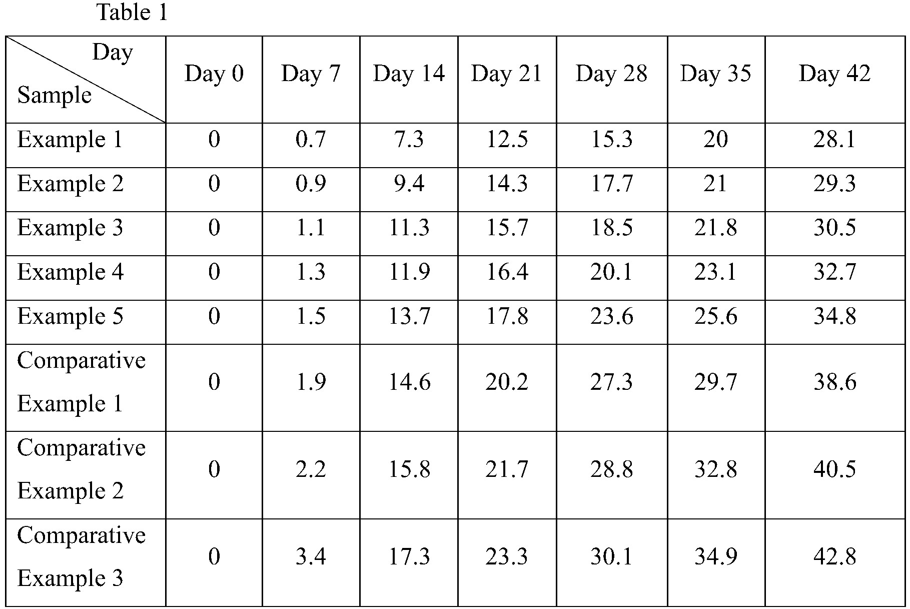

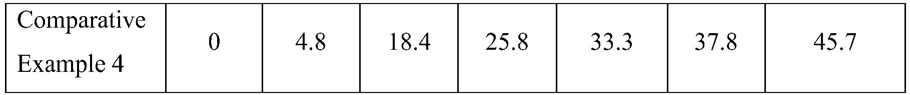

The experimental results show the following.

In the comparison between Example 2 and Example 1, it is illustrated that the F-ion doping of the core can be achieved by replacing AlF₃ with LiF and Al₂O₃.

In the comparison between Example 3 and Example 1, it is illustrated that V₂O₅ can also achieve the effect of an oxygen-absorbing layer.

In the comparison between Example 4 and Example 1, it is illustrated that MgF can replace AlF₃.

In the comparison between Example 2 and Example 1, it is illustrated that polycrystal materials can also achieve performance improvement.

In the comparison between Comparative example 1 and Example 1, it is illustrated that addition of appropriate F ions into the core is beneficial for improving gas production performance.

In the comparison between Comparative example 2 and Example 1, it is illustrated that addition of appropriate B ions into the core is beneficial for improving gas production performance.

In the comparison between Comparative example 3 and Example 1, it is illustrated that sintering in an oxygen atmosphere causes element Ce to be in its highest valence state of Ce⁴⁺, resulting in failure of the oxygen-absorbing layer, which is not conducive to improving gas production performance.

In the comparison between Comparative example 4 and Example 1, it is illustrated that addition of appropriate F ions into the passivation layer is beneficial for suppressing electrolyte corrosion and reducing gas generation.

### Example 6

This example provides a positive electrode material including a core, an oxygen-absorbing layer, and a passivation layer in sequence from inside to outside; where the core has a chemical formula of Li_{0.98}Ni_{0.88}Co_{0.1}Mg_{0.02}F_{0.012}O_{1.988}, and a particle size of 1µm-3µm; the oxygen-absorbing layer has a chemical formula of Ga_{3.6}O_{1.1}, and a thickness of 0.02µm; and the passivation layer has a chemical formula of Al_{0.67}W_{0.33}O_{1.72}F_{0.28}, and a thickness of 0.02µm.

### Example 7

This example provides a positive electrode material including a core, an oxygen-absorbing layer, and a passivation layer in sequence from inside to outside; where the core has a chemical formula of Li₁Ni_{0.5}Mn_{0.4}Al_{0.06}B_{0.02}F_{0.02}O_{1.98}, and a particle size of 5µm-8µm; the oxygen-absorbing layer has a chemical formula of Sn_{1.8}O_{1.6}, and a thickness of 0.04µm; and the passivation layer has a chemical formula of MgO_{1.92}F_{0.08}, and a thickness of 0.04µm.

### Example 8

This example provides a positive electrode material, including a core, an oxygen-absorbing layer, and a passivation layer in sequence from inside to outside; where the core has a chemical formula of Li_{1.1}Ni_{0.843}Co_{0.05}Mn_{0.1}Mo_{0.005}P_{0.002}O₂, and a particle size of 12µm-13µm; the oxygen-absorbing layer has a chemical formula of Bi_{0.9}O_{1.2}, and a thickness of 0.06µm; and the passivation layer has a chemical formula of Al_{1.32}O_{1.94}F_{0.06}, and a thickness of 0.06µm.

### Example 9

This example provides a positive electrode material, including a core, an oxygen-absorbing layer, and a passivation layer in sequence from inside to outside; where the core has a chemical formula of Li_{1.2}Ni_{0.64}Mn_{0.35}Zr_{0.007}Si_{0.003}O₂, and a particle size of 18µm-20µm; the oxygen-absorbing layer has a chemical formula of Pri_{1.1}O_{1.8}, and a thickness of 0.08µm; and the passivation layer has a chemical formula of Zr_{0.94}O_{1.72}F_{0.28}, and a thickness of 0.08µm.

### Example 10

This example provides a method for preparing a positive electrode material, which may be used for preparing the positive electrode material of any one of Examples 6-9, and the specific process thereof is as follows:
1. Obtaining respective raw materials according to the composition proportion of the target positive electrode material;
2. Mixing a precursor, a lithium source and a dopant evenly and performing a primary sintering under an oxygen atmosphere to obtain a first oxide, where the primary sintering has a temperature of 500°C and a holding duration of 15h;
3. Mixing the first oxide with a first coating agent, and performing a secondary sintering under a reducing atmosphere to obtain a second oxide, where the secondary sintering has a temperature of 600°C and a holding duration of 8h;
3. Mixing the second oxide with a second coating agent, and performing a tertiary sintering under an inert atmosphere to obtain a positive electrode material, where the tertiary sintering has a temperature of 600°C and a holding duration of 8h.

### Example 11

This example provides a method for preparing a positive electrode material, which may be used for preparing the positive electrode material of any one of Examples 6-9, and the specific process thereof is as shown in Example 10, except that the primary sintering has a temperature of 1000°C, and a holding duration of 8h.

### Example 12

This example provides a method for preparing a positive electrode material, which may be used for preparing the positive electrode material of any one of Examples 6-9, and the specific process thereof is as shown in Example 10, except that the secondary sintering has a temperature of 300°C, and a holding duration of 15h.

### Example 13

This example provides a method for preparing a positive electrode material, which may be used for preparing the positive electrode material of any one of Examples 6-9, and the specific process thereof is as shown in Example 10, except that the tertiary sintering has a temperature of 300°C, and a holding duration of 15h.

Finally, it should be noted that the above examples are only used to illustrate the technical solutions of the present invention, rather than to limit them. Although the present invention has been described in detail with reference to the aforementioned examples, those skilled in the art should understand that they can still modify the technical solutions described in the aforementioned examples, or make equivalent replacements for some of the technical features therein. However, such modifications or replacements do not make the essence of corresponding technical solutions deviate from the spirit and scope of the technical solutions of the various examples of the present invention.

## Claims

1. A positive electrode material, comprising a core, an oxygen-absorbing layer, and a passivation layer in sequence from inside to outside, wherein:
the core comprises an oxide composed of Ni, Li, a metal element *M* and a non-metal element *Q;* the metal element *M* comprises at least one of Mg, Al, Zr, Ca, Ti, Sr, Y, Nb, Mo, W, Ta, or Ce; the non-metal element *Q* comprises at least one of F, B, P, or Si;
the oxygen-absorbing layer is an unsaturated oxide containing a coating element *L*; the coating element *L* comprises at least one of V, Ga, In, Sn, Bi, Ce, Pr, or Sb;
the passivation layer is a compound containing element F.

2. The positive electrode material according to claim 1, wherein the core has an element composition as shown in Formula (I):
Li_{y}NiₐCo_{b}Mn_{c}M_{d}Q_{α}O₂ (I),
wherein values of *y*, *a, b, c, d,* and *α* are as follows:
0.98≤y≤1.20, 0.5≤a≤0.9, 0≤b≤0.4, 0≤c≤0.4, 0<d<0.1, 0<α<0.1.

3. The positive electrode material according to claim 1, wherein
in the core, the non-metal element *Q* comprises F; the core has an element composition as shown in Formula (III):
Li_{y}NiₐCo_{b}Mn_{c}M_{d}Q1_{α1}F_{α2}O_{2-α2} (III),
wherein element *Q1* comprises at least one of B, P, or Si;
values of *y, a, b, c, d, α1*, and *α2* are as follows:
0.98≤y≤1.20, 0.5≤a≤0.9, 0≤b≤0.4, 0≤c≤0.4, 0<d<0.1, 0≤α1<0.05, 0<α2<0.05.

4. The positive electrode material according to claim 1, wherein the oxygen-absorbing layer has an element composition as shown in Formula (II):
LₑO_{2-β} (II),
wherein, values of *e* and *β* are as follows: 0.8≤e≤4, 0.1<β<1.0.

5. The positive electrode material according to claim 1, wherein the passivation layer has an element composition shown in Formula (IV):
X_{f}O_{2-γ}F_{γ} (IV),
wherein, values of *f* and *γ* are as follows: 0.6<f<4, 0.05<γ<0.3;
element *X* comprises at least one of Li, Mg, Al, Zr, Ti, or W.

6. The positive electrode material according to any one of claims 1 to 5, wherein the core has a particle size of 0.5µm-20µm.

7. The positive electrode material according to any one of claims 1 to 6, wherein the oxygen-absorbing layer has a thickness of 0.01µm-0.1µm.

8. The positive electrode material according to any one of claims 1 to 7, wherein the passivation layer has a thickness of 0.01µm-0.1µm.

9. A method for preparing the positive electrode material according to any one of claims 1 to 8, comprising the following steps:
S10: obtaining a precursor, a lithium source and a dopant, mixing them evenly, and performing a primary sintering under an oxygen atmosphere or an air atmosphere to obtain a first oxide;
S20: mixing the first oxide with a first coating agent, and performing a secondary sintering under a reducing atmosphere or an inert atmosphere to obtain a second oxide;
S30: mixing the second oxide with a second coating agent, and performing a tertiary sintering under the reducing atmosphere or the inert atmosphere to obtain the positive electrode material;
wherein, the dopant comprises the metal element *M* and the non-metal element *Q;* the first coating agent comprises the coating element *L*; and the second coating agent comprises the element F.

10. The preparation method according to claim 9, wherein the primary sintering has a temperature of 500°C-1000°C, and a holding duration of 8h-15h.

11. The preparation method according to claim 9 or 10, wherein the secondary sintering has a temperature of 300°C-600°C, and a holding duration of 8h-15h.

12. The preparation method according to any one of claims 9 to 11, wherein the tertiary sintering has a temperature of 300°C-600°C, and a holding duration of 8h-15h.

13. The preparation method according to any one of claims 9 to 12, wherein the precursor, the lithium source and the dopant have a mixing molar ratio of 1:(1.04-1.20):(0.01-0.2).

14. The preparation method according to any one of claims 9 to 13, wherein the first oxide and the first coating agent have a mixing molar ratio of 1:(0.005-0.02).

15. The preparation method according to any one of claims 9 to 14, wherein the second oxide and the second coating agent have a mixing molar ratio of 1:(0.005-0.02).

16. The preparation method according to claim 9, wherein the lithium source comprises LiF.

17. The preparation method according to claim 9 or 16, wherein the dopant comprises at least one of LiF, MgF₂AlF₃, CeF₃, or ZrF₄.

18. A lithium-ion battery, comprising the positive electrode material according to any one of claims 1 to 8.
